(19) Europäisches Patentamt
European Patent Office
Office européen des brevets

(11) **EP 1 961 096 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **07822072.0**

(22) Anmeldetag: **31.10.2007**

(51) Int Cl.:
**H02H 9/04** (2006.01)　　**H02H 9/06** (2006.01)

(86) Internationale Anmeldenummer:
**PCT/EP2007/061724**

(87) Internationale Veröffentlichungsnummer:
**WO 2008/080667 (10.07.2008 Gazette 2008/28)**

(54) **ÜBERSPANNUNGSSCHUTZEINRICHTUNG FÜR DEN EINSATZ IN GLEICHSTROMNETZEN, INSBESONDERE FÜR PHOTOVOLTAIKANLAGEN**

OVERVOLTAGE PROTECTION DEVICE FOR USE IN DIRECT-CURRENT POWER SUPPLY SYSTEMS, IN PARTICULAR FOR PHOTOVOLTAIC SYSTEMS

DISPOSITIF DE PROTECTION CONTRE LES SURTENSIONS DESTINÉ À ÊTRE UTILISÉ DANS LES RÉSEAUX À COURANT CONTINU, NOTAMMENT POUR LES INSTALLATIONS PHOTOVOLTAÏQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **04.01.2007 DE 102007001091**
**02.04.2007 DE 102007015933**

(43) Veröffentlichungstag der Anmeldung:
**27.08.2008 Patentblatt 2008/35**

(73) Patentinhaber: **DEHN + SÖHNE GMBH + CO KG**
**92318 Neumarkt/Opf (DE)**

(72) Erfinder:
• **EHRHARDT, Arnd**
**92318 Neumark (DE)**

• **KÖNIG, Raimund**
**92369 Sengenthal (DE)**
• **HOHENWALD, Wilhelm**
**92318 Neumark/Opf. (DE)**

(74) Vertreter: **Meissner, Bolte & Partner**
**Anwaltssozietät GbR**
**Widenmayerstrasse 48**
**80538 München (DE)**

(56) Entgegenhaltungen:
**EP-A- 1 304 786　　DE-A1- 19 838 776**
**US-A- 5 325 259**

**Beschreibung**

Die Erfindung betrifft eine Überspannungsschutzeinrichtung für den Einsatz in Gleichstromnetzen, insbesondere für Photovoltaikanlagen, mit einer energetisch koordinierten Parallelschaltung eines ersten Ableitpfads und eines zweiten, triggerbaren Ableitpfads, welche jeweils ein unterschiedliches Ansprechverhaltung bezogen auf Störereignisse und Überspannungen aufweisen, gemäß Oberbegriff des Patentanspruchs 1.

Die Zusammenfassung von verschiedenen Überspannungsschutzelementen zu einer modularen Überspannungsschutzeinheit zum Zweck der Begrenzung von transienten Überspannungen ist beispielsweise aus der DE 32 28 471 A1 vorbekannt. Dort wird durch die parallele Anordnung einer Funkenstrecke mit einem Varistor eine Begrenzung von Überspannungen aus Schalthandlungen genauso wirkungsvoll vorgenommen, wie die Begrenzung von Störereignissen, die blitzbedingt entstehen und einen im Regelfall viel größeren Energieinhalt aufweisen.

Hierfür sind gemäß dem bekannten Stand der Technik die Schutzelemente auf zwei Ableitpfade verteilt und so koordiniert, dass auf einen ersten Pfad hauptsächlich die Überspannungen aus Schalthandlungen mit steiler Anstiegsflanke und relativ geringem Energieinhalt und auf einen zweiten Pfad diejenigen mit einem hohen Energieeintrag, z.B. einer Blitzentladung geleitet werden.

Weiterhin gehört nach der DE 198 38 776 C2 eine Schaltungsanordnung zur Steuerung der erforderlichen Koordination bei der Parallelschaltung mehrerer Überspannungsschutzelemente zum Stand der Technik. So wird bei der vorbekannten Lösung die Bewertung des Energieeintrags in ein Feinschutzelement, z.B. einen Varistor vorgenommen und daraufhin bedarfsgerecht ein Grobschutzelement, d.h. eine Funkenstrecke aktiviert. Die hier vorgesehenen Pfade sind demzufolge energetisch koordiniert, und zwar in dem .Sinne, dass von einer hierfür notwendigen Baugruppe der Energieeintrag im erstansprechenden ersten Pfad erfasst und ausgewertet wird und bei Überschreitung eines Grenzwerts bzw. mehrerer kritischer Grenzwertparameter ein Kommutierungsvorgang vom ersten Pfad auf den zweiten Pfad erfolgt.

Die US 5,325,259 A beschreibt eine Überspannungsschutzeinrichtung für eine in Serie geschaltete Kapazität mit zwei Ableitpfaden. Ein Ableitpfad enthält eine Funkenstrecke und der andere Ableitpfad enthält einen Leistungsschalter. Nach dem Aktivieren der Funkenstrecke des einen Ableitpfads wird die Funkenstrecke durch Schließen des Leistungsschalters im anderen Ableitpfad wieder ausgeschaltet. Eine solche Überspannungsschutzeinrichtung ist jedoch für Gleichstromnetze nicht geeignet, da durch die Kapazität kein Gleichstrom fließen kann. Zudem ist die Schaltgeschwindigkeit des Leistungsschalters sehr niedrig und beim Schalten des Leistungsschalters können sich Lichtbögen bilden.

Seit langem sind in der Blitzschutztechnik blitzstromtragfähige Funkenstrecken bekannt, die hauptsächlich im Niederspannungsbereich eingesetzt werden. Deren technische Weiterentwicklung geht auf eine Zündeinrichtung zurück, die es ermöglicht, den Zündzeitpunkt der Hauptentladungsstrecke einer solchen triggerbaren Funkenstrecke in weiten Grenzen zu bestimmen, wodurch eine optimale Abstimmung des Zündzeitpunkts, z.B. mit der Restspannung eines parallel angeordneten Varistors erfolgen kann. Durch die Zuordnung der Restspannung eines Varistorelements zu dem durchgeleiteten Strom kann so auf die energetische Belastung geschlossen werden, die über dem Varistor bis zum Zündzeitpunkt der Funkenstrecke aufgetreten ist.

Nach der in der DE 199 52 004 B4 beschriebenen Ausgestaltung einer Triggerung besteht damit die Möglichkeit, anhand von mindestens zwei Restspannungswerten und deren Zeitdauer unterschiedliche Zündzeitpunkte einzustellen und so die Koordination weiter zu optimieren. So erfolgt z.B. die unmittelbare Zündung der Funkenstrecke bei einem kurzen Stromimpuls über den Varistor erst bei einem relativ hohen Stromscheitelwert, während dies bei einem langanhaltenden Stromimpuls schon bei einem relativ kleinen Scheitelwert der Fall ist, sobald dieser eine Zeitmarke überschreitet, die außerhalb der Zeitdauer des Kurzzeitimpulses liegt.

Aus dem Vorgenannten ist es daher Aufgabe der Erfindung, eine weiterentwickelte Überspannungsschutzeinrichtung anzugeben, die speziell auf den Einsatz in Gleichstromnetzen, dort insbesondere für Photovoltaikanlagen abgestimmt ist. Diese Überspannungsschutzeinrichtung soll modular ausgeführt werden und zur Ableitung von Blitzentladungen und den damit im Zusammenhang stehenden Blitzströmen geeignet sein, und zwar unter solchen Bedingungen, wie sie in den vorerwähnten Gleichstromsystemen auftreten. So verändern sich bei Solaranlagen Spannungsebenen und Betriebsströme, was bei sonstigen AC-Netzen nicht der Fall ist. Die Problematik der Anwendung der Überspannungsschutzeinrichtung bevorzugt im Bereich industrieller Photovoltaikanlagen besteht auch darin, dass dort Gleichspannungen im Bereich von 1000 V auftreten.

Die Lösung der Aufgabe der Erfindung erfolgt durch eine Überspannungsschutzeinrichtung gemäß der Merkmalskombination nach Patentanspruch 1, wobei die Unteransprüche mindestens zweckmäßige Ausgestaltungen und Weiterbildungen darstellen.

Die Überspannungsschutzeinrichtung setzt sich aus mehreren Funktionseinheiten zusammen, die auf einer gemeinsamen Trägerplatte untergebracht sind, wobei die Trägerplatte Vorrichtungen enthält, um die Funktionseinheiten mechanisch zu befestigen und deren elektrische Verbindungen untereinander auf kürzestem Weg unter Beachtung der elektromagnetischen Verträglichkeit zu ermöglichen.

Bei der Überspannungsschutzeinrichtung für den Einsatz in Gleichstromnetzen wird von einer energetisch koordinierten Parallelschaltung eines ersten Ableitpfads und eines zweiten, triggerbaren Ableitpfads ausgegangen, wobei beide Ableitpfade ein unterschiedliches Ansprechverhaltung bezogen auf gegebene Störereignisse und Überspannungen besitzen.

Der erste Ableitpfad weist mindestens einen Varistor auf, dessen Restspannungswert erfasst wird und auf eine Steuerschaltung gelangt, um die energetische Belastung dieses ersten Ableitpfads zu ermitteln.

Der zweite Ableitpfad weist mindestens eine Funkenstrecke auf, deren Triggereingang mit einem ersten Ausgang der Steuerschaltung in Verbindung steht.

Dem ersten und dem zweiten Ableitpfad ist ein dritter Zweig als ein Kommutierungs- und Löschpfad parallel geschaltet, welcher einen Kurzschlussschalter, bestehend aus mindestens einem Leistungstransistor enthält, dessen Steuereingang an einem zweiten Ausgang der Steuerschaltung angeschlossen ist. Es sei an dieser Stelle angemerkt, dass anstelle eines Leistungstransistors auch andere schnell schaltende Elemente, wie z.B. Thyristoren oder ähnliches eingesetzt werden können.

Der zweite Ableitpfad mit Funkenstrecke wird über die Steuerschaltung nur dann aktiviert, wenn eine anhand der Restspannungsüberwachung erkannte energetische Überlastung des ersten Ableitpfads, bevorzugt des Varistors, zu erwarten ist. Weiterhin wird zur wirksamen Netzfolgestromunterdrückung der Kurzschlussschalter im dritten Zweig für einen vorgegebenen Zeitraum nach Ablauf einer Verzögerungszeit, gerechnet vom Ansprechen der Funkenstrecke im zweiten Pfad an, geschlossen, d.h. aktiviert.

Das Ansprechen der Funkenstrecke im zweiten Ableitpfad wird durch Überwachung der Systemspannung hinsichtlich des Auftretens von Spannungseinbrüchen mit Hilfe der vorerwähnten Steuerschaltung erkannt.

Alternativ kann zum Erkennen des Ansprechens der Funkenstrecke im zweiten Ableitpfad ein Stromsensor vorgesehen sein.

Die Steuerschaltung umfasst einen Taktgenerator zum Festlegen der Verzögerungszeit und/oder des Einschaltzeitraums des Kurzschlussschalters.

Der Einschaltzeitraum liegt bei einer bevorzugten Ausführungsvariante der Erfindung im Bereich zwischen 10 $\mu$s bis 3 ms.

Im Kurzschlusszustand wird der fließende Strom im dritten Zweig überwacht und bei Überlast der mindestens eine Leistungstransistor in einen offenen, hochohmigen Zustand überführt.

Bei insbesondere impulsstromartiger Stromüberlast kann der erste und/oder der zweite Ableitpfad im Sinne einer rückwirkenden Koordination erneut aktiviert werden.

Die Verzögerungszeit zum Aktivieren des Kurzschlussschalters bzw. des mindestens einen Leistungstransistors ist so eingestellt, dass die Impulslängen normierter Stoßstromimpulse überbrückt werden.

Da im Ableitfall keine Systemspannung vorliegt, weist die Steuerschaltung eine Energiespeichereinheit für deren sicheren Betrieb auch im Ableitfall auf.

Zur blitzschutztechnischen Erdverbindung ist die Überspannungsschutzeinrichtung ausgestaltend mit einer Trennfunkenstrecke versehen, welche in die Erdverbindung eingeschleift wird.

Die Erfindung soll nachstehend anhand eines Ausführungsbeispiels sowie unter Zuhilfenahme von Figuren näher erläutert werden.

Hierbei zeigen:

Fig. 1      eine perspektivische Darstellung des mechanischen Aufbaus der Überspannungsschutzeinrichtung mit den jeweiligen Funktions- einheiten;

Fig. 1a      ein Detail der Überspannungsschutzeinrichtung mit Funkenstrecke sowie fakultativ vorgesehener Trennfunkenstrecke;

Fig. 2      ein Prinzipschaltbild der Überspannungsschutzeinrichtung bezogen auf eine Beschaltung zwischen den Polen L+ und L- einer Photo- voltaikanlage;

Fig. 2a      das Schaltbild der Überspannungsschutzeinrichtung mit zusätz- licher Trennfunkenstrecke;

Fig. 2b      die Verschaltung der Funktionseinheiten, wie sie auf der Oberseite der Trägerplatte gemäß Fig. 1 angeordnet sind;

Fig. 2c      die Verschaltung der Funktionseinheiten, wie sie auf der Untersei- te der Trägerplatte gemäß Fig. 1 angeordnet sind, sowie

Fig. 3      Verläufe von Strom und Spannung während des Ableitvorgangs in schematischer Darstellung.

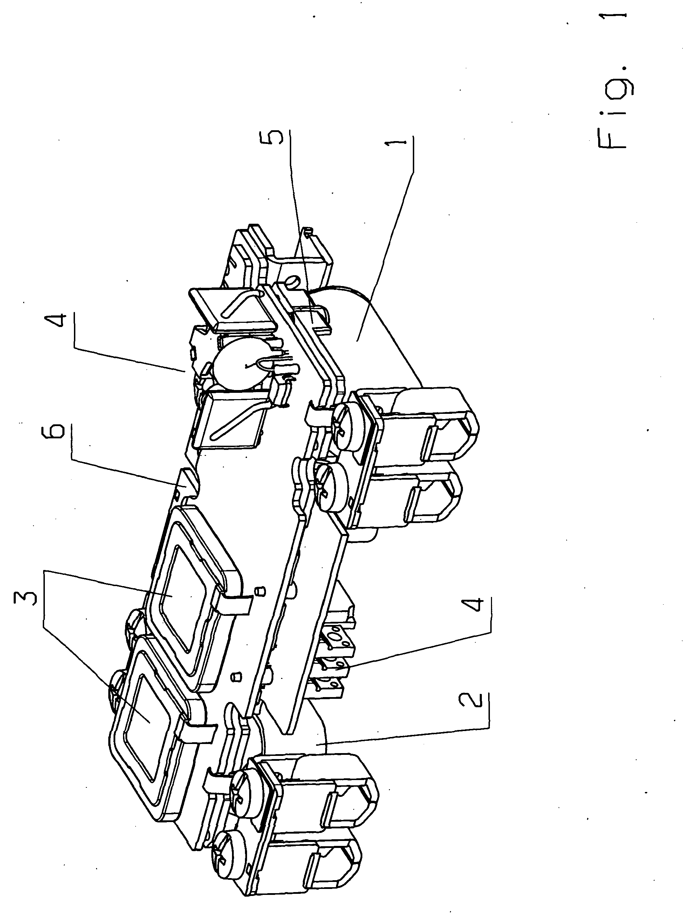

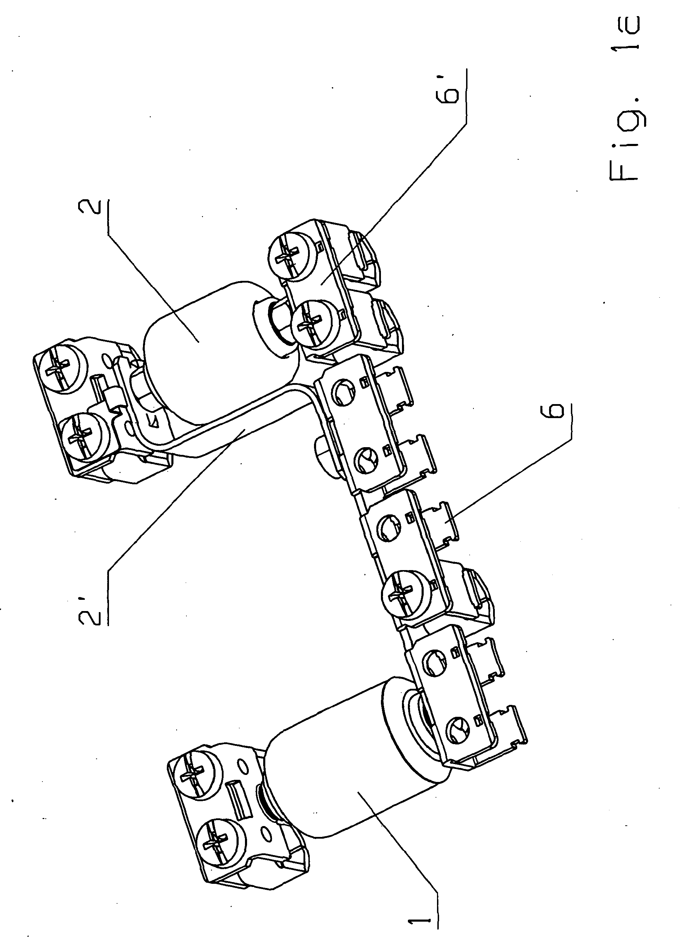

Die Überspannungsschutzeinrichtung gemäß den Fig. 1 und 1a umfasst eine Trägerplatine 5, auf der zwei Varistorelemente 3 (VDR1 und VDR2) auf der Oberseite angeordnet sind. Im Bild rechtsseitig gezeigt befindet sich eine Triggerschaltung, die Bestandteil der Steuerschaltung ist, welche als Koordinations- und Überwachungseinheit CCU, Bezugszeichen 4 dient.

Die Funkenstrecke des zweiten Ableitpfads ist mit dem Bezugszeichen 1 und die Trennfunkenstrecke mit dem Bezugszeichen 2 versehen. In den Fig. 1 und 1a ist die Erdschiene mit dem Bezugszeichen 6 und der Erdanschluss mit dem Bezugszeichen 6' (Fig. 1) dargestellt.

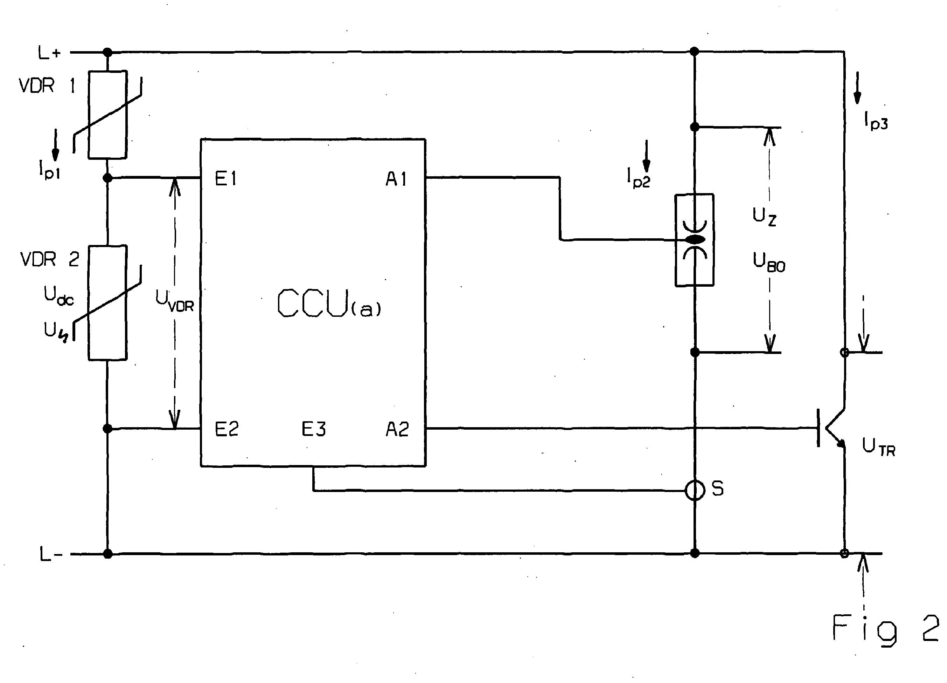

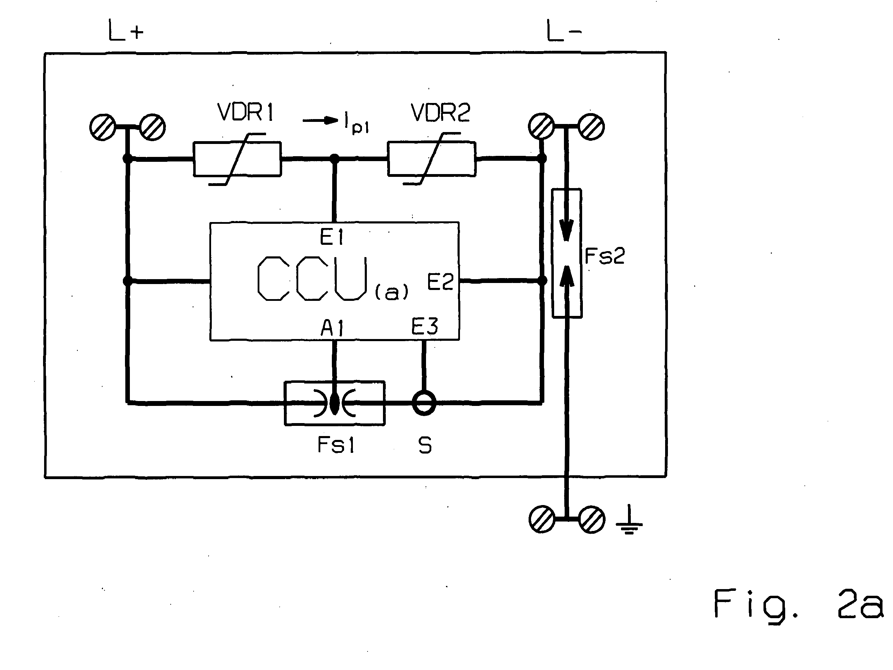

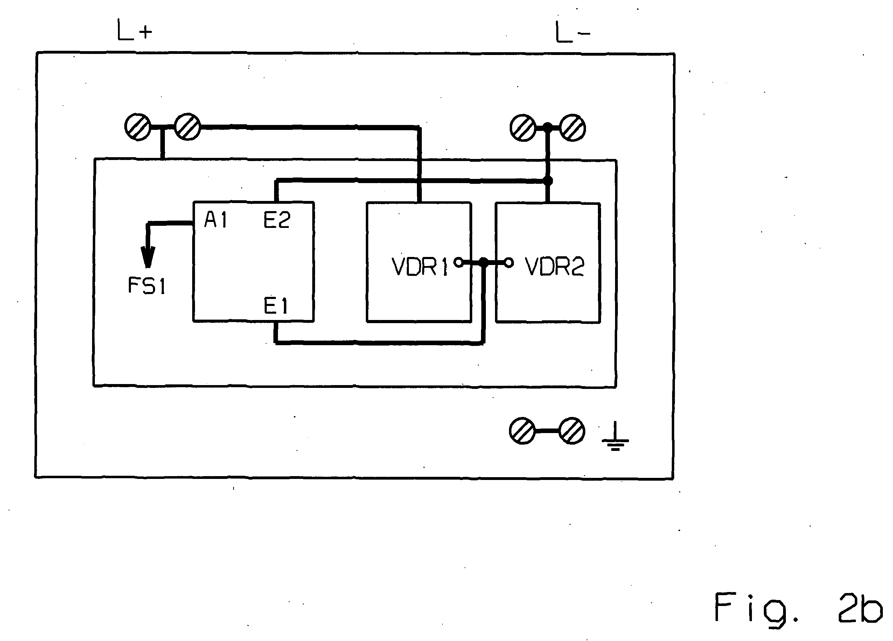

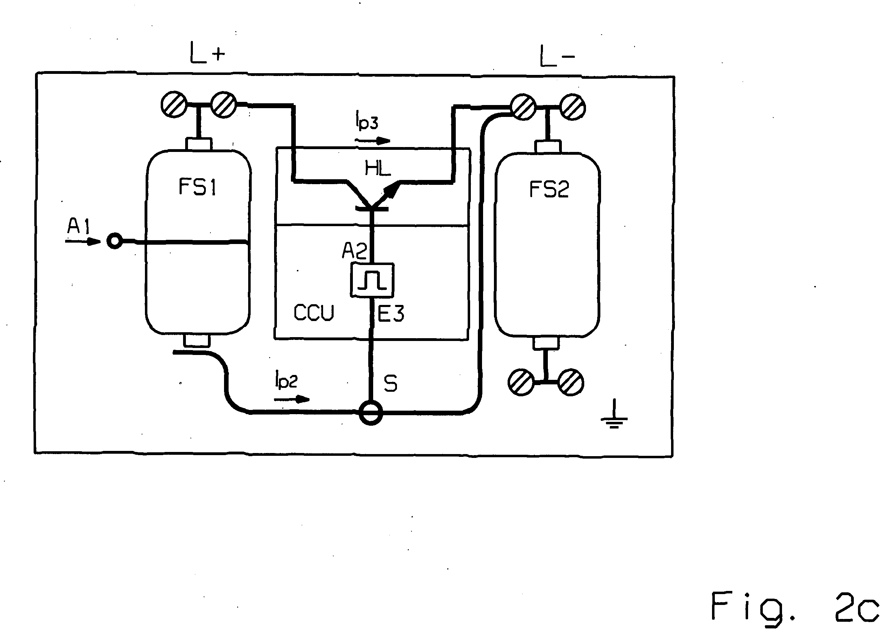

Über den ersten Ableitpfad nach Fig. 2 fließt der Strom $I_{p1}$. Der zweite Ableitpfad mit triggerbarer Funkenstrecke führt den Strom $I_{p2}$.

Im Kommutierungs- bzw. Löschpfad mit einem Transistor als Kurzschlussschalter fließt der Strom $I_{p3}$.

Im zweiten Ableitpfad befindet sich noch ein Stromsensor S, der auf einen Eingang der Steuerschaltung CCU (E3) geführt ist.

Die Spannung über dem Varistor VDR2, nämlich $U_{VDR}$, gelangt an die Eingänge E1 und E2 der Steuerschaltung CCU, an deren Ausgang A1 der Triggereingang der Funkenstrecke des zweiten Ableitpfads angeschlossen ist.

Der Ausgang A2 der Steuerschaltung CCU steht mit der Basis, d.h. dem Schalteingang des Transistors im dritten Zweig in Verbindung.

$U_{VDR}$ stellt die Restspannung über dem Varistor VDR2, $U_Z$ die Zünd- bzw. Ansprechspannung der Funkenstrecke, $U_{BO}$ die Bogenbrennspannung der Funkenstrecke und $U_{TR}$ die Kurzschlussspannung über dem Schalttransistor des Löschpfads bzw. des Kurzschlussschalters dar.

Die Koordination des ersten Pfades mit dem Strom $I_{p1}$ mit dem des zweiten Pfades, der den Strom $I_{p2}$ führt, erfolgt über die Steuerschaltung CCU, indem diese aufgrund der energetischen Belastung des ersten Pfades über ein Steuersignal die Triggereinrichtung der triggerbaren Funkenstrecke im zweiten Pfad aktiviert.

Daraufhin wird die Hauptentladungsstrecke der Funkenstrecke über einen entsprechenden Zündimpuls gezündet und der Ableitstrom, der ursprünglich über den ersten Pfad abgeleitet wurde, kommutiert in den zweiten Pfad. Voraussetzung für eine vollständige Kommutierung, bei der der erste Pfad vollkommen stromlos wird, ist eine gegenüber der Varistorspannung möglichst kleine Bogenspannung, die sich nach deren Ansprechen über der Entladungsstrecke der Funkenstrecke einstellt.

Durch die Kommutierung erfährt der Varistor eine Entlastung, indem die leistungsfähigere Funkenstrecke quasi den Ableitvorgang und damit den Stoßstrom übernimmt.

Da der Varistorpfad zu diesem Zeitpunkt elektrisch nicht mehr aktiv ist, muss die Funkenstrecke selbst den Ableitvorgang abschließen, so dass sich danach die normalen Netzbedingungen wieder einstellen. Dies bedeutet, dass in vielen Fällen, nachdem der Stoßstromimpuls abgeklungen ist, die Funkenstrecke den nachfolgenden Strom aus dem anliegenden Netz ausschalten, d.h. löschen muss. Dieser Netzfolgestrom oder Folgestrom genannt, entsteht, sobald oder solange die treibende Spannung des Netzes über der Funkenstrecke größer ist als deren Bogenbrennspannung.

Folgeströme können je nach Stromhöhe und/ oder Zeitdauer eine erhebliche Belastung für die Funkenstrecke darstellen und sind deshalb in der Regel in der Beurteilung ihrer Energiebilanz nicht zu vernachlässigen. Sie können im nicht geregelten, unkontrollierten Zustand dazu führen, dass die Funkenstrecke vorzeitig altert und schließlich ausfällt.

Es ist daher notwendig, das Auftreten von Folgeströmen zu vermeiden oder diese zeitlich sowie in der Amplitude zu begrenzen.

Zur Lösung der Folgestrom-Problematik muss nun noch beachtet werden, dass in Gleichspannungsnetzen von Solaranlagen sehr hohe Spannungswerte vorliegen.

Erfindungsgemäß soll als erste Maßnahme das Auftreten eines Folgestroms vermieden werden, indem das Ansprechen der Funkenstrecke nur dann erfolgt, wenn die Gefahr einer energetischen Überlastung für den Varistor besteht. Ist diese Gefahr nicht gegeben, übernimmt der Varistor den Ableitvorgang vollständig und es ist damit funktionsbedingt ein Folgestrom ausgeschlossen.

Die energetische Bewertung erfolgt in der Steuerschaltung CCU, die bevorzugt anhand des Restspannungsverlaufs über den Varistor ein selektiv ausgerichtetes Triggersignal erzeugt, wodurch die triggerbare Funkenstrecke zum Ansprechen gebracht wird.

Da die Zuschaltung des zweiten Ableitpfads abhängig von der Leistungsfähigkeit der Varistoren im ersten Pfad erfolgt, ergibt sich so ein breiter wählbarer Bereich, innerhalb dessen der Varistor die vollständige Ableitung des Stromimpulses bewerkstelligen kann, ohne dass einerseits die Gefahr einer Überlastung des Varistors besteht und andererseits überhaupt ein Folgestrom auftritt.

Dieser Bereich kann durch die selektiv ausgerichtete Bewertung mit Hilfe der Steuerschaltung gegenüber einfachen Auswertemethoden erweitert werden, so dass z.B. bei einem energiearmen Stoßstromimpuls der Wellenform 8/20 μs ein bestimmter Varistortyp bis 10 kA und der gleiche Typ bei einem weiteren energiereichen Stromimpuls der Wellenform 10/350 μs bis 1,5 kA belastet werden kann.

Mit vorstehender Methodik ist ausgeschlossen, dass ein Folgestrom bereits bei energieschwachen Impulsströmen auftritt, die z.B. als Folge von Schaltspannungen oder gemäßigten indirekten Blitzeinwirkungen in relativ häufiger Folge eintreten können. Auch über die gesamte Palette der indirekten Blitzeinwirkungen, repräsentiert durch die Wellenform 8/20 μs, sind keine Folgeströme zu erwarten. Hingegen wird die Funkenstrecke bei den durch die Wellenform 10/350 μs nachgebildeten direkten Blitzeinwirkungen bestimmungsgemäß zugeschaltet. Es ist also bereits aufgrund dieser Konfiguration mit vergleichsweise wenigen Folgestromereignissen zu rechnen.

Als weitere Maßnahme zum Verhindern des Auftretens von Folgeströmen wird zunächst überwacht, wann die Funkenstrecke durchgeschaltet ist und der Ablauf einer Verzögerungszeit beginnt. Wird der Zeitpunkt, zu dem der Impulsstrom abgeklungen ist, bewertet oder ist die vorgegebene Verzögerungszeit abgelaufen, wird in dem dritten Zweig, d.h. dem Kommutierungs- und Löschpfad, der Schalter betätigt, welcher die Bogenbrennspannung der Funkenstrecke kurzschließt, so dass der einsetzende oder bereits eingesetzte Folgestrom kommutiert und die dann stromfreie Funkenstrecke gelöscht wird. Nach einer kurzen Einschaltdauer wird der Kurzschluss durch Öffnen des Schalters im Löschpfad wieder aufgehoben und es wird der ursprüngliche Betriebszustand, wie er vor dem Ableitvorgang bestanden hat, wieder hergestellt.

Im Vergleich zu bekannten Methoden ist die vorgestellte Lösung einfach, platzsparend und kostengünstig umzusetzen. Hierdurch ergibt sich der Vorteil, dass Funkenstreckenkonfigurationen genutzt werden können, die in üblicher Weise bisher nur bei Wechselspannungsnetzen zum Einsatz kommen bzw. für derartige Netze konzipiert wurden.

Wie bereits aus den Blockschaltbildern ersichtlich, weist der Löschpfad einen Kurzschlussschalter auf, der physikalisch in der Lage ist, sowohl die elektrischen und mechanischen Anforderungen, wie sie im Zusammenhang mit dem Kommutierungsvorgang auftreten, zu erfüllen. Darüber hinaus ist der Schalter steuerbar, damit ein koordiniertes Ein- und Ausschalten über die Steuerschaltung CCU erfolgen kann.

Im Zusammenhang mit dem Schaltvorgang besteht die Forderung, dass neben der Fähigkeit einer hohen Schaltlast der Schaltvorgang an sich ohne die Ausbildung eines Schaltlichtbogens erfolgt. Dadurch können aufwendige Löschkammern und damit ein hoher Platzbedarf, der sich zusätzlich ergäbe, eingespart werden. Da es innerhalb einer kurzen Einschaltzeit möglich ist, den Folgestrom zu löschen bzw. eine Wiederverfestigung der isolationsstrecke einer Funkenstrecke zu erreichen, ist der Schalter sowohl schnell einschalt- als auch wieder ausschaltbar ausgelegt, d.h. besitzt eine hohe dynamische Schaltgeschwindigkeit.

Hinsichtlich der Vorteile, die sich in Umsetzung der Erfindungslehre ergeben, sei noch auf Folgendes aufmerksam gemacht.

Der Aufwand, bei einer Gleichspannung von ca. 1000 V einen Folgestrom zu löschen, ist bei der Verwendung einer Funkenstrecke sehr hoch und erfordert üblicherweise sehr kostenintensive Maßnahmen zur Lichtbogenlöschung. Übliche recht preiswerte Funkenstrecken sind für die Beherrschung von Wechselspannungen im Niederspannungsbereich dimensioniert und ausgelegt. Die zu beherrschenden Spannungen sind bei diesem Anwendungsfall deutlich niedriger, zudem erlischt der Lichtbogen im natürlichen Stromnulldurchgang selbständig. Bei einer Gleichspannung existiert kein natürlicher Stromnulldurchgang und die Funkenstrecken müssen daher nach dem Gleichstromlöschprinzip arbeiten. Die für eine erfolgreiche Abschaltung des Folgestroms benötigte Schaltleistung ist erheblich und erfordert speziell entwickelte sowie auch platz- und kostenintensive Funkenstrecken, welche ausschließlich für den vorgenannten Anwendungsfall anzupassen sind. Die Alterung einer derartigen Funkenstrecke ist aufgrund der erhöhten benötigten Schaltleistung erheblich. Letztendlich müssen entsprechende Funkenstrecken über aufwendige Löschkammern mit einem damit verbundenen hohen Platzbedarf verfügen.

Mit der Erfindung gelingt es durch den separat rücksetzbaren Kurzschlusspfad, übliche und konventionelle Funkenstrecken aus dem Niederspannungsbereich, welche nur über ein ausreichendes Folgestromlöschvermögen bei Wechselstrom und deutlich niedrigeren Spannungen verfügen, auch für Anwendungen im Gleichspannungsbereich bis 1000 V nutzbar zu machen.

Vorteilhaft ist weiterhin die drastische Reduzierung der umgesetzten Leistung innerhalb der Funkenstrecke, da die bei dem üblichen Gleichstromlöschprinzip benötigte Lichtbogenspannung von > 1000 V nicht erzeugt werden muss, sondern die Lichtbogenspannung z.B. nur 30 V betragen kann. Bei gleichem Strom kann somit die Schaltleistung, die Funkenstreckenbelastung und die Alterung um mehr als Faktor 30 reduziert werden.

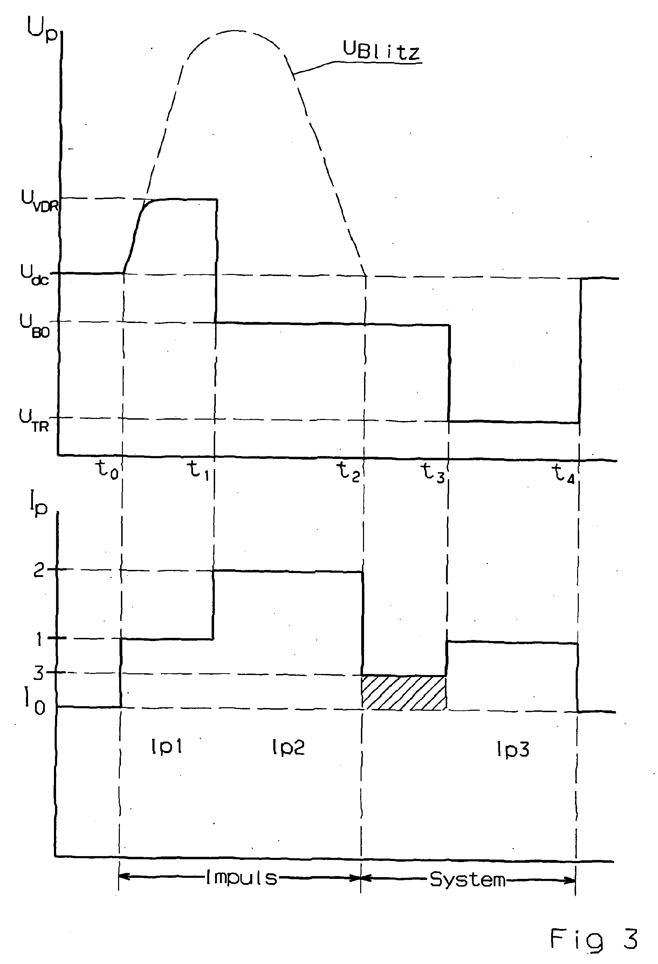

Das erfindungsgemäße Grundprinzip beruht darauf, den Folgestrom nicht mit Hilfe der Funkenstrecke zu löschen, sondern die Löschfunktion für den Netzfolgestrom auf ein alterungs- und lichtbogenfreies Halbleiterbauelement zu verlagern. Somit besteht quasi eine funktionale Trennung und Aufgabenteilung zwischen der Funkenstrecke und dem Halbleiterbauelement. Die Kombination Funkenstrecke und Varistor realisiert insgesamt die Funktion der Ableitung impulsförmiger Störgrößen, wobei der Halbleiter die Funktion der lichtbogenfreien Folgestromlöschung übernimmt. Eine Voraussetzung hierfür ist die vollständige Kommutierung des Folgestroms aus der Funkenstrecke in den Halbleiterpfad und eine sowohl in der Höhe als auch in der Geschwindigkeit ausreichende Wiederverfestigung der Funkenstrecke, bevor das Halbleiterelement den Folgestrom abschaltet. Die vollständige Kommutierung wird dadurch erreicht, dass der Spannungsabfall des Löschpfads niedriger als die Lichtbogenspannung der Funkenstrecke ist. Die Einschaltdauer des Halbleiters ist von der Differenz der Spannungen $U_{TR}$ und $U_{BO}$ sowie der Wiederverfestigungszeit der Funkenstrecke abhängig, wie dies im Ausführungsbeispiel unter Hinweis auf die dortige Fig. 3 näher erläutert wird.

Um den Zuschaltzeitpunkt für den Löschpfad exakt bestimmen zu können sowie um zu vermeiden, dass ein Impulsstrom über ihn fließt oder der Folgestrom zu lange im Ableitpfad der Funkenstrecke verbleibt, ist nicht nur ein reaktionsschnelles Einschalten des Kurzschlussschalters notwendig, sondern es ist auch eine schaltungstechnische Einrichtung erforderlich, die die Möglichkeit einer Kopplung mit einer Sensorik zur Überwachung des Funkenstreckenpfads bietet.

So ist z.B. der Strom über die Funkenstrecke erfassbar, so dass direkt nach dem Abklingen des Impulsstroms der Kurzschlussschalter aktiviert werden kann. Ein unerwünschter Folgestrom über die Funkenstrecke wird vermieden und es reduziert sich die energetische Belastung der Funkenstrecke sowie die dadurch bedingte Alterung auf das Führen des Impulsstroms, wie er aus einer transienten Überspannung resultiert. Als Kurzschlussschalter wird bevorzugt ein Leistungstransistor eingesetzt, welcher unter der Voraussetzung, dass seine elektrischen Grenzwerte nicht überschritten werden, keinerlei Verschleiß- oder Alterungserscheinungen unterliegt.

Erfindungsgemäß ist dafür Sorge getragen, dass diejenigen Schaltungsteile, von denen eine große Störemission ausgeht, entkoppelt von solchen Baugruppen befindlich sind, die einer Störempfindlichkeit unterliegen. Dies wird dadurch realisiert, dass die einzelnen Funktionen in Gruppen aufgeteilt sind, die zum einen nur Störquellen oder unempfindliche Schaltungsteile zusammenfassen, und zum anderen solche, die störempfindlich sind, wobei die Verbindungen der Gruppen untereinander trotz räumlicher Trennung auf kürzestem Wege ausgelegt sind.

Der Kurzschlussschalter kann aus kaskadierten Transistoren zusammengesetzt werden, um im ausgeschalteten Zustand eine hohe Spannungsfestigkeit zu erreichen, die oberhalb des Schutzpegels der Überspannungsschutzeinrichtung selbst liegt.

Um eine Beschädigung des Transistorschalters zu verhindern, wird dieser hochohmig geschaltet, wenn das zulässige maximale Stromintegral erreicht oder überschritten wird. Bei Stromüberlast für den Fall des Einschaltens führt diese vorgesehene quasi Notabschaltung gegebenenfalls dazu, dass der Lösch- bzw. Kommutierungsvorgang unterbrochen wird. Es ist daher notwendig, eine solche Notabschaltung von einem regulären Schaltvorgang zu unterscheiden und im Gegensatz dazu weitere Löschversuche einzuleiten, bis ein regulärer Schaltvorgang zustande kommt.

Als regulärer Schaltvorgang gilt derjenige, der ohne Unterbrechung über die gesamte, fest eingestellte Einschaltzeit Bestand hat. Die Einschaltzeit setzt sich aus der Löschzeit und der Erholungszeit zusammen, welche die Funkenstrecke in der Regel belastungsabhängig benötigt, um vom niederohmigen leitenden Bereich in den hochohmigen isolierenden Bereich überzugehen. Dementsprechend kann die erforderliche Einschaltzeit im Bereich von ca. 10 μs bis 3 ms liegen.

Erfolgt die Stromüberlast, nachdem die Transistoren bereits eingeschaltet sind, muss die Notabschaltung ebenso einsetzen und wie beschrieben gegebenenfalls einen oder mehrere weitere Löschzyklen erzeugen, bis ein regulärer Schaltvorgang einsetzt.

Die Notabschaltung bewirkt, dass der Kurzschlussschalter den Löschpfad hochohmig schaltet. Dies bedeutet aber auch für den Fall, dass es sich bei der Stromüberlast um einen Impulsstrom handelt, dass die Spannung über dem Löschpfad so weit ansteigen kann, dass sie zum erneuten Ansprechen des ersten oder sogar des zweiten Ableitpfads führt. Dadurch weist die Überspannungsschutzeinrichtung vorteilhafterweise nicht nur eine einfache durchgängige, sondern auch eine rückwirkende Koordination auf, bei der die letzte Stufe der Anordnung (dritter Zweig) im Bedarfsfall auf die erste zurückwirkt.

Damit kann die Überspannungsschutzeinrichtung auch sogenannte multiple Blitzentladungen, bei denen in gewissen Abständen mehrere Überspannungen bzw. Stromimpulse auftreten, bewältigen, wenn eine weitere Strombelastung während der aktivierten Phase des Löschpfads erfolgen sollte. Es wird durch diese Rückkoppelfunktion quasi selbsttätig die entsprechende Ableiterstufe, nämlich der erste oder zweite Ableitpfad angesprochen.

Die Steuerschaltung CCU dient dazu, sämtliche Informationen über die zeitlichen Abläufe der Funktionsgruppen zu erfassen und entsprechende Stell- oder Steuerbefehle an die Stellglieder auszugeben. Eine der wichtigsten Funktionen der Steuerschaltung CCU ist neben der Bewertung der Varistorbelastung und die Ausgabe der resultierenden Signale zur selektiven Triggerung der Funkenstrecke die Koordination der im Löschpfad implementierten Funktionen.

Dazu gehören neben Funktionen, die mit der Notabschaltung zusammenhängen, auch diejenigen, die mit dem Löschvorgang einhergehen, und zwar beginnend mit der Erkenntnis, dass die Funkenstrecke angesprochen hat, über die ereignis- oder zeitgesteuerte Zuschaltung des Kurzschlussschalters bis hin zu dessen Abschaltung oder Retriggerung mit abschließendem regulären Schaltvorgang.

Die Erfassung, dass die Funkenstrecke angesprochen hat, kann dadurch vorgenommen werden, indem die anliegende Systemspannung auf Spannungseinbrüche hin überwacht wird, die typischerweise dem Ansprechen einer Funkenstrecke entsprechen und z.B. eine bestimmte Spannungssteilheit aufweisen, wobei gleichzeitig ein bestimmter Spannungswert unterschritten wird.

Spannungseinbrüche aus externen Vorgängen, die diesem Raster entsprechen, werden dadurch vorteilhafterweise ebenfalls erfasst, wodurch auch z.B. ein durch Isolationsfehler auftretender Störlichtbogen im gesamten Stromkreis kontrolliert und gelöscht werden kann.

Die vorliegenden Informationen werden von der Steuerschaltung CCU bewertet und gelten beispielsweise als Startbedingung für die Verzögerungszeit, nach deren Ablauf der Kurzschlusspfad zugeschaltet wird.

Die Verzögerungszeit kann so eingestellt werden, dass sie z.B. die Impulslängen der normierten Stoßstromimpulse der Wellenform 8/20 μs oder 10/350 μs ausblendet oder zeitlich überbrückt.

Für einen Stromimpuls 10/350 μs wäre dann eine Verzögerungszeit von etwa 2 ms zu veranschlagen, die auch bei kürzeren Impulsbeaufschlagungen einen Folgestrom in etwa entsprechend dieser Zeitdauer möglicherweise verursacht.

Durch die gegebene Funktion der Notabschaltung kann auch eine kürzere Totzeit, die sich an dem kürzeren Stromimpuls 8/20 μs orientiert, eingestellt werden, z.B. eine Zeit von 60 μs, so dass bei längeren Impulsen, z.B. 10/350 μs, die Notabschaltung so lange zyklisch aktiviert wird, wie der Strom größer ist als der zulässige Schaltstrom im Kurzschlusspfad.

Bei der angenommenen Totzeit von 60 μs versucht der Kurzschlusspfad über mehrere periodische Schaltzyklen, den Kurzschlussschalter zur Einleitung der Kommutierung zu betätigen, bis schließlich der Restwert des Impulsstroms auf den zulässigen Schaltstrom abgeklungen ist. Durch diese Maßnahme kann über die Verzögerungszeiteinstellung eine zeitliche Vorgabe im Sinne einer Taktzeit vorgenommen werden, nach deren Ablauf ein Schaltversuch zur Kommutierung erfolgen soll. Der Vorteil dieser Einstellung liegt in der Verkürzung der Folgestromphase insbesondere bei hohen, zu erwartenden Folgeströmen.

Bei einer weiteren Ausführungsform der Erfindung wird im zweiten Ableitpfad ein Stromsensor angeordnet, dessen Signalerfassung von der Steuerschaltung auf den Impulsstrom oder den Folgestrom oder beide Stromarten einstellbar ist. Damit besteht die Möglichkeit, den Kommutierungsvorgang unabhängig von einer fest eingestellten Verzögerungszeit bereits dann zu starten, wenn der Impulsstrom über der Funkenstrecke auf einen Wert abgeklungen ist, der dem zulässigen Schaltstrom im Löschpfad entspricht. Durch die geringere Reaktionszeit der Verbindung mit der hohen Schaltgeschwindigkeit des Kurzschlussschalter im Löschpfad kommt daher kein Folgestrom zustande. Dies ist eine weitere Möglichkeit, um den Schaltzeitpunkt bei hohen, zu erwartenden Folgeströmen möglichst nahe am Übergang des abklingenden Stoßstroms zum einzusetzenden Folgestrom zu platzieren.

Die erläuterten Ausführungsbeispiele zur Erfassung der Schaltbedingungen für den Kurzschlusspfad zeigen, dass eine Anpassungsfähigkeit und Flexibilität im weiten Bereich unter Nutzung der Steuerschaltung möglich ist. In den weiteren Funktionen, die die Steuerschaltung bewerkstelligen kann, ist auch eine Kombination oder logische Verknüpfung verschiedener Eigenschaften möglich, um z.B. die Schaltkriterien zu erweitern, indem für bestimmte Situationen der Löschpfad einen gewollten Dauerkurzschluss bildet oder eine langzeitig anhaltende, außerhalb des transienten Zeitbereichs auftretende Überspannung auf einen bestimmten Wert begrenzt wird. Weitere Aufgaben, die mit der Steuerschaltung CCU zu bewerkstelligen sind, ist auch eine automatische Verlängerung der Einschaltzeit, wenn innerhalb einer zunächst vorgegebenen Zeitspanne keine Löschung erfolgt oder die Einbeziehung der Erwärmungstemperatur der Funkenstrecke in die automatische Bemessung der Kurzschlussschalter-Einschaltdauer, d.h. der Löschzeit.

Aufgrund der Tatsache, dass während des gesamten Ableitvorgangs die Systemspannung praktisch nicht verfügbar ist, verfügt die Steuerschaltung über einen Energiespeicher, der für diese Phase die notwendige Stromversorgung sicherstellt.

Wie bereits erläutert, besteht der Halbleiterschalter als Kurzschlussschalter bevorzugt aus einem Leistungstransistor, der als geeignetes Bauelement über die geforderten Ein- und Ausschaltfunktionen in kurzen Zeitintervallen, auch bei hohen Schaltströmen verfügt. Denkbar sind hier auch alternative Lösungen, die z.B.

einen schaltbaren Thyristor oder einen Thyristor oder triggerbaren Gasableiter in Serie mit einem Varistor oder einem PTC-Element verwenden.

Unter Hinweis auf die Fig. 2a und 2c besteht unter bestimmten Einsatzbedingungen die Forderung, dass der aktive Stromkreis, z.B. die in Solaranlagen mit L+/L- gekennzeichneten Pole vom Erdpotential (Erde) sicher getrennt bzw. installiert sein muss.

In diesem Fall muss die aus blitzschutztechnischer Sicht erforderliche Erdverbindung über eine Trennfunkenstrecke erfolgen. Für diesen Bedarfsfall ist in der modularen Überspannungsschutzeinrichtung eine solche Trennfunkenstrecke 2 (siehe Fig. 1 und 1a) integrierbar, indem die Erdschiene 6 aufgetrennt und über die Trennfunkenstrecke mit dem Erdanschluss 6' verbunden wird. Besteht hierzu keine Notwendigkeit, entfällt diese Funkenstrecke 2 und wird werksseitig durch eine durchgängige Erdschiene (Verbindung 6 und 6') ersetzt.

Fig. 3 zeigt typische Verläufe von Strom und Spannung während des Ableitvorgangs.

Der Bereich "Impuls" bezieht sich hier auf den eigentlichen Ableitvorgang bis zum Abklingen der Beeinflussungsgröße $U_{Blitz}$, während der Bereich "System" die Löschphase mit einem über der Funkenstrecke auftretenden Folgestrom bis zur Wiederkehr der Systemspannung darstellt.

Für die gezeigte Stromkommutierung in den einzelnen Phasen $I_{p1}$ bis $I_{p3}$ gilt folgende Bedingung:

$$U_{TR} < U_{BO} < U_{VDR}$$

Im Zeitbereich t0 bis t1 beansprucht die Beeinflussungsgröße $U_{Blitz}$ zunächst den Varistor im Ableitpfad $I_{p1}$ und bewirkt dort die Spannung $U_{VDR}$.

Überschreitet diese Spannung im Zusammenhang mit dem dazugehörigen Strom die zulässige Belastung des Varistors (einen auf Höhe und Zeitdauer eingestellten Wert), kommutiert der Strom zum Zeitpunkt t1 in den Ableitpfad $I_{p2}$ der Funkenstrecke ein gemäß Darstellung nach Fig. 1 und 1a, so dass die Varistorspannung $U_{VDR}$ auf den Wert $U_{BO}$ unterhalb der Systemspannung $U_{dc}$ einbricht. Nachdem die Beeinflussungsgröße abgeklungen ist, stellt sich über der Funkenstrecke 1 zum Zeitpunkt t2 ein Netzfolgestrom ein, der zum Zeitpunkt t3 in den Kurzschlusspfad $I_{p3}$ kommutiert und von diesem zum Zeitpunkt t4 abgeschaltet wird. Zwischen den Zeitpunkten t3 und t4 wird die Spannung auf die Transistorspannung $U_{TR}$ abgesenkt.

Der Zeitbereich t2 bis t3 stellt einen Bereich dar, in dem im vorliegenden Fall ein nicht erwünschter Folgestrom über der Funkenstrecke auftritt (schraffierte Darstellung). In Verbindung mit einer Sensorik, insbesondere einem Stromsensor S, und einem schnellen Kurzschlussschalter kann dieser unerwünschte Zeitbereich so weit verkürzt werden, dass er über die Impulsstrombelastung hinaus für die Funkenstrecke keine zusätzliche Belastung mehr darstellt.

Zusammenfassend verfügt die erfindungsgemäße Überspannungsschutzeinrichtung für Gleichspannungssysteme über Eigenschaften, die es ermöglichen, Funkenstrecken nach dem Stand der Technik in Gleichspannungsapplikationen einzusetzen, wobei die Lösungsmittel darauf zielen, einen Folgestrom zu vermeiden, indem die Funkenstrecke nur im Bedarfsfall in den Ableitvorgang einbezogen wird. Folgeströme werden dadurch vermieden, indem der Kurzschlussschalter im Löschpfad sofort nach Abklingen des Impulsstroms schaltet bzw. es können Folgeströme zeitlich begrenzt werden, indem ein definierter Spannungseinbruch in der Systemspannung eine Verzögerungszeit anstößt, nach deren Ablauf der Kurzschlussschalter im Löschpfad betätigt wird.

Neben dem eigentlichen Funkenstreckenpfad ist ein weiterer Ableitpfad mit einem Überspannungsschutzelement vorgesehen, das kleinere bis mittlere Impulsströme führen kann, ohne selbst Folgeströme auszubilden. Zusätzlich ist ein Löschpfad vorhanden, der einen auftretenden Folgestrom erkennt und durch Kurzschluss der Bogenspannung der Funkenstrecke eine Stromkommutierung aus dem Funkenstreckenpfad in den Löschpfad bewirkt. Der Löschvorgang wird überwacht und gegebenenfalls wiederholt, sobald erkannt wird, dass keine reguläre Löschung erfolgt ist.

Die Überspannungsschutzeinrichtung ist so koordiniert, dass der erste Ableitpfad mit Varistor bei Überlastung auf den leistungsfähigeren zweiten Ableitpfad mit Funkenstrecke kommutiert. Nach Abklingen des Stromimpulses im Funkenstreckenpfad findet eine Kommutierung in den Löschpfad statt. Bei Überlastung des Kurzschluss-Löschpfads kann mit einer schnellen Notabschaltung auf den ersten Varistorpfad und von dort gegebenenfalls auf den zweiten Pfad mit Funkenstrecke erneut kommutiert werden.

Bezugszeichenliste

| | |
|---|---|
| 1 | triggerbare Funkenstrecke (FS1) |
| 2 | Trennfunkenstrecke (FS2) |
| 2' | Anschlussbügel |
| 3 | Varistorelemente (VDR1 / VDR2) |
| 4 | Steuerschaltung als Koordinations- und Überwachungseinheit (CCU) |
| 5 | Trägerplatte |
| 6 | Erdschiene |
| 6' | Erdanschluss |

**Patentansprüche**

**1.** Überspannungsschutzeinrichtung für den Einsatz in Gleichstromnetzen, insbesondere für Photovoltaikanlagen mit einer energetisch koordinierten Parallelschaltung eines ersten Ableitpfads und eines zweiten, triggerbaren Ableitpfads, welche jeweils ein unterschiedliches Ansprechverhalten bezogen auf Störereignisse und Überspannungen aufweisen, wobei

- der erste Ableitpfad mindestens einen Varistor (3) aufweist, dessen Restspannungswert erfasst wird und auf eine Steuerschaltung (4) gelangt, um die energetische Belastung des ersten Ableitpfads zu ermitteln,
- der zweite Ableitpfad mindestens eine Funkenstrecke (1) aufweist, deren Triggereingang mit einem ersten Ausgang der Steuerschaltung (4) in Verbindung steht, **dadurch gekennzeichnet, dass**
- dem ersten und zweiten Ableitpfad ein dritter Zweig als Kommutierungs- und Löschpfad parallel geschaltet ist, welcher einen Kurzschlussschalter enthält, dessen Steuereingang an einem zweiten Ausgang der Steuerschaltung (4) angeschlossen ist,
- wobei der zweite Ableitpfad mit Funkenstrecke (1) über die Steuerschaltung (4) nur dann aktiviert wird, wenn eine anhand der Restspannungsüberwachung erkannte energetische Überlastung des ersten Ableitpfads zu erwarten ist und weiterhin zur wirksamen Netzfolgestrombegrenzung der Kurzschlussschalter im dritten Zweig für einen vorgegebenen Zeitraum nach Ablauf einer Verzögerungszeit, gerechnet vom Ansprechen der Funkenstrecke (1) im zweiten Ableitpfad an, geschlossen wird.

**2.** Überspannungsschutzeinrichtung nach Anspruch 1, **dadurch gekennzeichnet, dass** das Ansprechen der Funkenstrecke (1) im zweiten Ableitpfad durch Überwachung der Systemspannung hinsichtlich des Auftretens von Spannungseinbrüchen mit Hilfe der Steuerschaltung (4) erkannt wird.

**3.** Überspannungsschutzeinrichtung nach Anspruch 1, **dadurch gekennzeichnet, dass** zum Erkennen des Ansprechens der Funkenstrecke (1) im zweiten Ableitpfad ein Stromsensor vorgesehen ist.

**4.** Überspannungsschutzeinrichtung nach einem der vorangegangenen Ansprüche, **dadurch gekennzeichnet, dass** die Steuerschaltung (4) einen Taktgenerator zum Festlegen der Verzögerungszeit und/oder des Einschaltzeitraums des Kurzschlussschalters aufweist.

**5.** Überspannungsschutzeinrichtung nach Anspruch 4, **dadurch gekennzeichnet, dass** der Einschaltzeitraum im Bereich zwischen 10 µs bis 3 ms liegt.

6. Überspannungsschutzeinrichtung nach einem der vorangegangenen Ansprüche,
**dadurch gekennzeichnet, dass**
im Kurzschlusszustand der fließende Strom im dritten Zweig überwacht und bei Überlast ein als Kurzschlussschalter eingesetzter Leistungstransistor in einen offenen, hochohmigen Zustand überführt wird.

7. Überspannungsschutzeinrichtung nach Anspruch 6,
**dadurch gekennzeichnet, dass**
bei insbesondere impulsstromartiger Stromüberlast der erste und/oder der zweite Ableitpfad aktiviert werden.

8. Überspannungsschutzeinrichtung nach einem der vorangegangenen Ansprüche,
**dadurch gekennzeichnet, dass**
die Verzögerungszeit so eingestellt ist, dass die Impulslängen normierter Stoßstromimpulse überbrückt werden.

9. Überspannungsschutzeinrichtung nach einem der vorangegangenen Ansprüche,
**dadurch gekennzeichnet, dass**
die Steuerschaltung (4) eine Energiespeichereinheit für deren Betrieb im Ableitfall aufweist.

10. Überspannungsschutzeinrichtung nach einem der vorangegangenen Ansprüche,
**dadurch gekennzeichnet, dass**
zur blitzschutztechnischen Erdverbindung eine Trennfunkenstrecke (2) vorgesehen und in die Erdverbindung eingeschleift ist.

**Claims**

1. Overvoltage protection device for use in direct-current networks, in particular for photovoltaic systems, comprising an energetically coordinated parallel circuit of a first arresting path and a second triggerable arresting path, each of which has a different response characteristic relative to disturbing events and overvoltages, wherein

   - the first arresting path comprises at least one varistor (3) whose residual voltage value is acquired and passed to a control circuit (4) in order to determine the energetic load of the first arresting path,
   - the second arresting path comprises at least one spark gap (1) whose
   trigger input is connected to a first output of the control circuit (4), **characterized in that**
   - a third branch is connected in parallel with the first and second arresting paths as a commutating and quenching path, which contains a short-circuiting switch whose control input is connected to a second output of the control circuit (4),
   - wherein the second arresting path with the spark gap (1) is activated via the control circuit (4) only if an energetic overload of the first arresting path detected by means of the residual voltage monitoring is expected and furthermore, for the effective limitation of the network follow current, the short-circuiting switch in the third branch is closed for a predetermined period after a delay time has elapsed, calculated from the response of the spark gap (1) in the second arresting path.

2. Overvoltage protection device according to claim 1,
**characterized in that**
the response of the spark gap (1) in the second arresting path is detected by monitoring the system voltage with respect to the occurrence of voltage drops with the aid of the control circuit (4).

3. Overvoltage protection device according to claim 1,
**characterized in that**
a current sensor is provided in the second arresting path for detecting the response of the spark gap (1).

4. Overvoltage protection device according to one of the preceding claims,
**characterized in that**
the control circuit (4) comprises a clock generator for fixing the delay time and/or the switch-on period of the short-circuiting switch.

5. Overvoltage protection device according to claim 4,
**characterized in that**
the switch-on period is in the range between 10 $\mu$s to 3 ms.

6. Overvoltage protection device according to one of the preceding claims,
**characterized in that**
in the short-circuited state the flowing current in the third branch is monitored, and in the event of an overload a power transistor employed as short-circuiting switch is transferred into an open, high-impedance state.

7. Overvoltage protection device according to claim 6,
**characterized in that**
the first and/or the second arresting path are activated particularly in the event of a pulsed current type current overload.

8. Overvoltage protection device according to one of the preceding claims,
**characterized in that**
the delay time is set to bridge the pulse lengths of normalized surge current pulses.

9. Overvoltage protection device according to one of the preceding claims, **characterized in that** the control circuit (4) has an energy storage unit for the operation thereof in the arrest case.

10. Overvoltage protection device according to one of the preceding claims, **characterized in that** for the lightning protection related earth connection a separation spark gap (2) is provided and looped into the earth connection.

**Revendications**

1. Dispositif de protection anti-surtensions destiné à être employé dans des réseaux à courant continu, en particulier pour des installations photovoltaïques avec un branchement parallèle coordonné sur le plan énergétique d'un premier trajet de dérivation et d'un second trajet de dérivation susceptible d'être déclenché, lesquels présentent chacun un comportement de réaction différent par référence à des événements perturbateurs et des surtensions, dans lequel

- le premier trajet de dérivation comprend au moins un varistor (3) dont la valeur de tension résiduelle est détectée et parvient à un circuit de commande (4), afin de déterminer la charge énergétique du premier trajet de dérivation,
- le second trajet de dérivation comprend au moins un éclateur (1), dont l'entrée de gâchette est connectée à une première sortie du circuit de commande (4),
**caractérisé en ce que**
- une troisième ramification est branchée en parallèle au premier et au second trajet de dérivation à titre de trajet de commutation et d'extinction, laquelle contient un commutateur de court-circuit dont l'entrée de commande est connectée à une seconde sortie du circuit de commande (4),
- dans lequel le second trajet de dérivation avec éclateur (1) est activé via le circuit de commande (4) uniquement lorsqu'il est prévisible qu'il se produira une surcharge énergétique du premier trajet de dérivation comme reconnu à l'aide de la surveillance de tension résiduelle, et en outre, pour limiter efficacement le courant de suite du réseau, le commutateur de court-circuit dans la troisième ramification est fermé pendant une période prédéterminée après écoulement d'un temps de retard, calculé depuis la réaction de l'éclateur (1) dans le second trajet de dérivation.

2. Dispositif de protection anti-surtensions selon la revendication 1, **caractérisé en ce que** la réaction de l'éclateur (1) dans le second trajet de dérivation est reconnue par surveillance de la tension du système vis-à-vis de l'apparition de chutes de tension, à l'aide du circuit de commande (4)

3. Dispositif de protection anti-surtensions selon la revendication 1, **caractérisé en ce que** l'on prévoit un capteur de courant pour reconnaître la réaction de l'éclateur (1) dans le second trajet de dérivation.

4. Dispositif de protection anti-surtensions selon l'une des revendications précédentes, **caractérisé en ce que** le circuit de commande (4) comprend un générateur de cadence pour fixer le temps de retard et/ou la durée de fermeture du commutateur de court-circuit.

5. Dispositif de protection anti-surtensions selon la revendication 4, **caractérisé en ce que** la durée de fermeture est dans la plage entre 10 $\mu$s et 3 ms.

6. Dispositif de protection anti-surtensions selon l'une des revendications précédentes, **caractérisé en ce que**, dans la situation en court-circuit, le courant qui s'écoule dans la troisième ramification est surveillé et, en cas de surcharge, un transistor de puissance employé à titre de commutateur de court-circuit est passé dans un état ouvert à forte résistance ohmique.

7. Dispositif de protection anti-surtensions selon la revendication 6, **caractérisé en ce que**, en particulier dans le cas d'une surcharge de courant du type à impulsion, le premier et/ou le second trajet de dérivation sont activés.

8. Dispositif de protection anti-surtensions selon l'une des revendications précédentes, **caractérisé en ce que** le temps de retard est réglé de telle façon que les longueurs d'impulsions représentant des pointes de courant normalisées sont court-circuitées.

9. Dispositif de protection anti-surtensions selon l'une des revendications précédentes, **caractérisé en ce que** le circuit de commande (4) comprend une unité d'accumulation d'énergie pour son fonctionnement dans le cas de dérivation.

10. Dispositif de protection anti-surtensions selon l'une des revendications précédentes, **caractérisé en ce que**, pour la liaison à la terre selon des techniques de type paratonnerre, il est prévu un éclateur de séparation (2) qui est intégré dans la liaison à la terre.

Fig. 1

EP 1 961 096 B1

Fig. 1e

Fig 2

EP 1 961 096 B1

L+   L-

VDR1   $\rightarrow$ I$_{p1}$   VDR2

E1

CCU$_{(a)}$   E2

A1   E3

Fs1   S

Fs2

Fig. 2a

EP 1 961 096 B1

Fig. 2b

Fig. 2c

Fig 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3228471 A1
- DE 19838776 C2
- US 5325259 A
- DE 19952004 B4